# EUROPEAN PATENT SPECIFICATION

(11) **EP 4 276 123 B1**
(45) Date of publication and mention of the grant of the patent: **09.07.2025**
(21) Application number: 22911526.6
(22) Date of filing: 27.09.2022
(51) Int. Cl.: C08F 210/02, C08F 218/06, C08F 8/12, C08F 6/26, C08F 6/00, C08F 6/10, C08F 216/06, C08F 218/08

(54) **PREPARATION METHOD FOR ETHYLENE-VINYL ALCOHOL COPOLYMER**
VERFAHREN ZUR HERSTELLUNG VON ETHYLEN-VINYLALKOHOL-COPOLYMER
PROCÉDÉ POUR LA PRÉPARATION DE COPOLYMÈRE D'ÉTHYLÈNE-ALCOOL VINYLIQUE

(30) Priority: 22.12.2021 KR 20210185017; 26.09.2022 KR 20220121584
(43) Date of publication of application: 15.11.2023
(73) Proprietor: LG Chem, Ltd., Seoul 07336 (KR)
(72) Inventor: SONG, Sungjin, Daejeon 34122 (KR); BAEK, Se Won, Daejeon 34122 (KR); BAE, Hyojin, Daejeon 34122 (KR); KIM, Bongjune, Daejeon 34122 (KR)
(74) Representative: Hoffmann Eitle
(86) International application number: PCT/KR2022/014419
(87) International publication number: WO 2023/120887

(56) References cited:
- CN-A- 102 942 649
- JP-B2- 5 944 388
- JP-B2- 6 554 702
- KR-A- 20200 062 338
- KR-A- 20210 082 360

## Description

### [TECHNICAL FIELD]

### Cross-reference to Related Application(s)

This application claims the benefit of Korean Patent Applications No. 10-2021-0185017 filed on December 22, 2021 and No. 10-2022-0121584 filed on September 26, 2022 with the Korean Intellectual Property Office, the disclosures of which are incorporated herein by reference in their entirety.

The present disclosure relates to a preparation method for an ethylene-vinyl alcohol copolymer.

### [BACKGROUND OF ART]

An ethylene-vinyl alcohol copolymer (EVOH) is widely used as a material for films, sheets, containers, etc. due to its excellent gas barrier properties such as oxygen, transparency, oil resistance, antistatic property, and mechanical strength.

The EVOH may be prepared by a saponification reaction of an ethylene-vinyl acetate copolymer (EVAc) prepared by copolymerization of ethylene and vinyl acetate. Specifically, a generally known preparation method includes the steps of performing saponification on EVAc in the presence of an alkali catalyst, extruding a polymer component, molding it into pellets, and then washing with water to remove the catalyst remaining in the pellets and by-products, followed by drying.

However, the above method has a disadvantage in that it is not easy to remove impurities present in the pellets. When an excessive amount of an alkali catalyst is used to increase the degree of saponification of EVOH, the content of catalyst impurities in the pellets is also increased. In order to sufficiently remove them, an excessive washing process is required, so that a large amount of wastewater is generated, and overall production efficiency is lowered. In addition, if the size of the pellets is reduced in order to increase the efficiency of the washing process, productivity of extrusion and pelletization is lowered, and thus, it is also not preferable in terms of production efficiency.

JP5944388 discloses a process of saponification of ethylene polyvinyl acetate with methanol and NaOH, wherein the neutralized reaction is then allowed to cool and solidify into a cake. The cake is then washed and powdery ethylene vinyl alcohol is obtained using a drier at 60°C.

KR20200062338 discloses a process of saponification of ethylene polyvinyl acetate with methanol and NaOH. The solid block obtained is pulverized to give wet particles which are then deliquored and dried.

KR20210082360 discloses a process of saponification of ethylene polyvinyl acetate with methanol and NaOH. EVOH is dissolved in an aqueous solution of methanol with a ratio methanol: water 60:40. The EVOH/methanol/water solution has a solids content of 41wt%. The EVOH is the pelletized.

JP6554702 discloses a process of saponification of ethylene polyvinyl acetate with methanol and NaOH. Acetic acid is added to stop the polymerization and then EVOH is preciptated. The obtained powder is washed with an aqueous acetic solution and then dried again.

### [DETAILED DESCRIPTION OF THE INVENTION]

### [Technical Problem]

In the present disclosure, there is provided a preparation method for an ethylene-vinyl alcohol copolymer capable of increasing the efficiency of a washing process and minimizing the amount of wastewater generated.

### [Technical Solution]

According to one embodiment of the present disclosure, there is provided a preparation method for an ethylene-vinyl alcohol copolymer, including the steps of:
performing saponification on an ethylene-vinyl acetate copolymer in the presence of an alkali catalyst and a C₁₋₄ alcohol solvent to obtain a reaction mixture containing an ethylene-vinyl alcohol copolymer;
concentrating the reaction mixture and then adding water to prepare an ethylene-vinyl alcohol copolymer solution having a weight ratio of C₁₋₄ alcohol to water in the solvent of 1:9 to 9:1 and a solid content of 10 wt% to 25 wt%;
cooling the ethylene-vinyl alcohol copolymer solution to prepare an ethylene-vinyl alcohol copolymer cake in which the ethylene-vinyl alcohol copolymer is coagulated;
pulverizing the ethylene-vinyl alcohol copolymer cake to obtain an ethylene-vinyl alcohol copolymer crumb; and
washing the crumb with water.

### [ADVANTAGEOUS EFFECTS]

According to the present disclosure, a high-purity ethylene-vinyl alcohol copolymer can be prepared by a simple washing process compared to the conventional preparation method. Therefore, the present disclosure may make it possible to increase the production efficiency of the ethylene-vinyl alcohol copolymer, and to minimize the amount of wastewater generated in the washing process.

### [BRIEF DESCRIPTION OF THE DRAWINGS ]

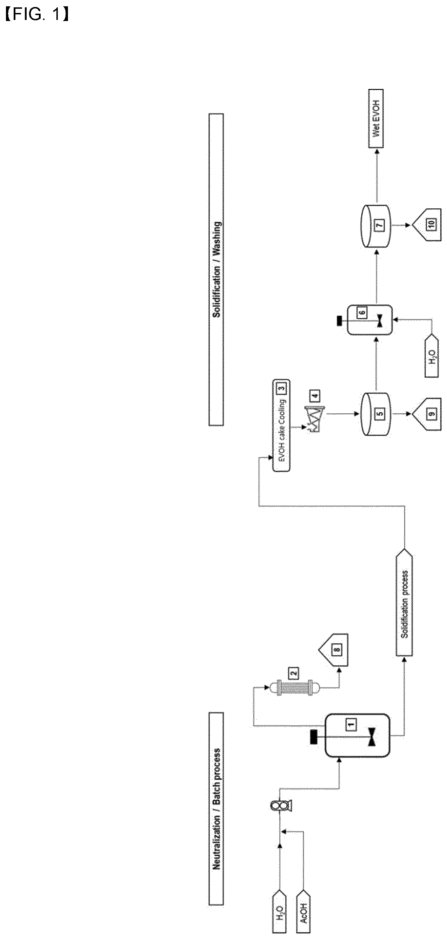

FIG. 1 illustrates an apparatus capable of performing the preparation method for an ethylene-vinyl alcohol copolymer of the present disclosure.

### [DETAILED DESCRIPTION OF THE EMBODIMENTS]

The terminology used herein is for the purpose of describing particular embodiments only and is not intended to be limiting of the invention. The singular forms are intended to include the plural forms as well, unless the context clearly indicates otherwise. It will be further understood that the terms "include", "have", or "possess" when used in this specification, specify the presence of stated features, steps, components, or combinations thereof, but do not preclude the presence or addition of one or more other features, steps, components, or combinations thereof.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

Unless otherwise specified in this disclosure, the pressure condition is normal pressure (760 ± 50 torr).

The preparation method for an ethylene-vinyl alcohol copolymer of the present disclosure includes the steps of:
performing saponification on an ethylene-vinyl acetate copolymer in the presence of an alkali catalyst and a C₁₋₄ alcohol solvent to obtain a reaction mixture containing an ethylene-vinyl alcohol copolymer (step 1);
concentrating the reaction mixture and then adding water to prepare an ethylene-vinyl alcohol copolymer solution having a weight ratio of C₁₋₄ alcohol to water in the solvent of 1:9 to 9:1 and a solid content of 10 wt% to 25 wt% (step 2);
cooling the ethylene-vinyl alcohol copolymer solution to prepare an ethylene-vinyl alcohol copolymer cake in which the ethylene-vinyl alcohol copolymer is coagulated (step 3);
pulverizing the ethylene-vinyl alcohol copolymer cake to obtain an ethylene-vinyl alcohol copolymer crumb (step 4); and
washing the crumb with water (step 5).

The conventional method for preparing an ethylene-vinyl alcohol copolymer includes the steps of performing saponification on an ethylene-vinyl acetate copolymer and extruding an ethylene-vinyl alcohol copolymer, then pelletizing, followed by washing and drying. However, since the pelletized ethylene-vinyl alcohol copolymer had low washing efficiency, there was a problem that several long washing processes were required in order to sufficiently remove impurities such as catalyst and by-products.

Accordingly, the present inventors have studied a method for obtaining a high-purity ethylene-vinyl alcohol copolymer from the reaction mixture without an excessive washing process after the saponification reaction of the ethylene-vinyl acetate copolymer. As a result, it was confirmed that a high-purity ethylene-vinyl alcohol copolymer could be obtained with high efficiency through the above steps, thereby completing the present invention.

Hereinafter, the present disclosure will be described in detail step by step.

In the present disclosure, first, an ethylene-vinyl acetate copolymer is saponified in the presence of an alkali catalyst and a C₁₋₄ alcohol solvent to obtain a reaction mixture containing an ethylene-vinyl alcohol copolymer (step 1).

In the present disclosure, the ethylene-vinyl acetate copolymer, which is a reaction material for preparing an ethylene-vinyl alcohol copolymer, may be prepared by using a commercially available product or by copolymerizing ethylene and vinyl acetate monomers.

The ethylene-vinyl acetate copolymer may be copolymerized by further including a monomer copolymerizable therewith in addition to ethylene and vinyl acetate. Examples of such a monomer include α-olefins such as propylene, isobutylene, α-octene, and α-dodecene; unsaturated acids such as acrylic acid, methacrylic acid, crotonic acid, maleic acid, and itaconic acid, salts thereof, anhydrides thereof, or alkyl- or dialkyl esters thereof; nitriles such as acrylonitrile and methacrylonitrile; amides such as acrylamide and methacrylamide; olefinsulfonic acids such as ethylenesulfonic acid, arylsulfonic acid, and metaarylsulfonic acid, or salts thereof; vinyl-based monomers such as alkyl vinyl ethers, vinyl ketone, N-vinylpyrrolidone, vinyl chloride, and vinylidene chloride; and the like.

The ethylene content of the ethylene-vinyl acetate copolymer may be appropriately adjusted according to the desired physical properties of the ethylene-vinyl alcohol copolymer. For example, in order to achieve gas barrier properties and melt-moldability of the ethylene-vinyl alcohol copolymer, the ethylene content of the ethylene-vinyl acetate copolymer may be 20 mol% or more, 25 mol% or more, or 30 mol% or more, and 60 mol% or less, 50 mol% or less, or 40 mol% or less, but the present disclosure is not limited thereto.

Meanwhile, the ethylene content may be calculated from the peak integration ratio of ¹H-NMR data of the ethylene-vinyl acetate copolymer or the ethylene-vinyl alcohol copolymer.

The weight average molecular weight (Mw) of the ethylene-vinyl acetate copolymer is not particularly limited, but for example, 150,000 g/mol or more, 170,000 g/mol or more, or 180,000 g/mol or more, and 290,000 g/mol or less, 270,000 g /mol or less, or 250,000 g/mol or less. The weight average molecular weight of the ethylene-vinyl alcohol copolymer obtained by performing saponification on the ethylene-vinyl acetate copolymer satisfying the above weight average molecular weight may be 110,000 g/mol or more, 120,000 g/mol or more, or 130,000 g/mol or more, and 220,000 g/mol or less, 200,000 g/mol or less, or 190,000 g/mol or less.

The weight average molecular weight of the ethylene-vinyl acetate copolymer and the ethylene-vinyl alcohol copolymer may be measured by gel permeation chromatography (GPC).

An alcohol solvent is usually used for the saponification reaction of the ethylene-vinyl acetate copolymer. In the present disclosure, a lower alcohol having 1 to 4 carbon atoms is used as the solvent. Examples of the C₁₋₄ alcohol may include at least one selected from the group consisting of methanol, ethanol, n-propanol, isopropanol, n-butanol, and t-butanol, and methanol may be preferably used.

The amount of the alcohol used is not particularly limited, and may be determined according to the amount of reactants and reaction conditions.

The alkali catalyst may be at least one selected from the group consisting of sodium hydroxide, potassium hydroxide, lithium hydroxide, sodium methoxide, sodium ethoxide, potassium t-butoxide, sodium carbonate, sodium hydrogen carbonate, potassium carbonate, potassium hydrogen carbonate, sodium acetate, potassium acetate, and sodium propionate. Preferably, at least one selected from the group consisting of sodium hydroxide, potassium hydroxide, sodium methoxide, and sodium ethoxide may be used.

In order for the saponification reaction of the ethylene-vinyl acetate copolymer to proceed smoothly, the alkali catalyst may be used in an amount of 0.01 mol or more, or 0.015 mol or more, and less than 0.05 mol, or 0.04 mol or less based on 1 mol of the vinyl acetate unit of the ethylene-vinyl acetate copolymer.

The reaction temperature during the saponification reaction may be 40 °C or higher, 50 °C or higher, or 60 °C or higher, and 120 °C or lower, 110 °C or lower, or 100 °C or lower. When the reaction temperature is less than 40 °C, the saponification reaction rate may be too slow, and when it exceeds 120 °C, side reactions easily occur, so it is preferable to satisfy the above range.

In addition, the reaction pressure during the saponification reaction may be 0.01 bar or more, or 0.05 bar or more, and 0.5 bar or less, or 0.4 bar or less, but the present disclosure is not limited thereto.

The saponification reaction may be performed under an inert gas atmosphere such as nitrogen or argon, and the reaction may proceed while continuously discharging methyl acetate, by-products, to the outside of the system to increase the conversion rate.

When the saponification reaction proceeds and the desired conversion rate is achieved, the reaction is stopped by adding an acid such as acetic acid to neutralize the reaction mixture. Thereafter, a process for purifying the ethylene-vinyl alcohol copolymer from the neutralized reaction mixture (steps 2 to 5) is performed.

The neutralization and purification of the reaction mixture may be performed, for example, using an apparatus as shown in FIG. 1.

The amount of acid added for neutralizing the reaction mixture may be adjusted according to the amount of alkali catalyst used. For example, 0.9 equivalents or more, or 1.0 equivalents or more, and 1.5 equivalents or less, or 1.2 equivalents or less of the acid may be added based on 1 equivalent of the alkali catalyst.

Subsequently, an ethylene-vinyl alcohol copolymer solution having a weight ratio of C₁₋₄ alcohol to water in the solvent of 1:9 to 9:1 and a solid content of 10 wt% to 25 wt% is prepared by concentrating the reaction mixture, followed by adding water (step 2).

The concentration of the reaction mixture is a process for evaporating all or part of the C₁₋₄ alcohol, a solvent, and the method is not particularly limited thereto. For example, the reaction mixture may be concentrated by evaporating the C₁₋₄ alcohol after blowing an inert gas such as nitrogen or argon while heating the neutralized reaction mixture in a neutralization tank 1. The heating temperature may be appropriately adjusted according to the composition of the C₁₋₄ alcohol and the reaction mixture used. For example, it may be 35 °C or higher, or 45 °C or higher, and 65 °C or lower, or 55 °C or lower under normal pressure (760 torr). Alternatively, the C₁₋₄ alcohol may be evaporated while blowing an inert gas at a lower temperature in the neutralization tank 1 where the pressure is lowered. The C₁₋₄ alcohol remaining in the reaction mixture after the concentration may be used as a cosolvent in the preparation of an ethylene-vinyl alcohol copolymer solution.

Adding water to the concentrated reaction mixture as described above provides an ethylene-vinyl alcohol copolymer solution having the weight ratio of C₁₋₄ alcohol to water of 1:9 to 9:1, 7:3 to 3:7, or 4:6 to 6:4, and the solid content of 10 wt% or more, or 15 wt% or more, and 25 wt% or less, or 20 wt% or less.

The water may be distilled water or deionized water having an electrical conductivity of 10 µS/cm or less, preferably 5 µS/cm or less. As the lower electrical conductivity of the water can be evaluated as the better, the lower limit is not limited. However, it may be, for example, 0.1 µS/cm or more, or 0.3 µS/cm or more.

The C₁₋₄ alcohol may remain after the concentration of the reaction mixture. Alternatively, an ethylene-vinyl alcohol copolymer solution may be prepared by further adding C₁₋₄ alcohol when water is added in order to achieve the above solvent ratio.

The ethylene-vinyl alcohol copolymer is not soluble in a single solvent of C₁₋₄ alcohol or water, but can be dissolved in a solvent in which C₁₋₄ alcohol and water are mixed in a weight ratio of 1:9 to 9:1 as described above. Accordingly, an ethylene-vinyl alcohol copolymer solution is prepared using a mixed solvent of C₁₋₄ alcohol and water, and then cooled for solidification, thereby preparing an ethylene-vinyl alcohol copolymer in the form of a cake. In addition, when the above solvent composition is satisfied, the ethylene-vinyl alcohol copolymer coagulated in the form of a cake may be pulverized to an appropriate particle size in a subsequent process.

When the content of C₁₋₄ alcohol in the solvent of the ethylene-vinyl alcohol copolymer solution is too low or the solid content is too high, exceeding 25 wt%, it is not easy to pulverize the ethylene-vinyl alcohol copolymer cake in the subsequent process, and thus an efficiency of the subsequent washing process may be reduced.

Conversely, when the content of water in the solvent is too low or the solid content is less than 10 wt%, the ethylene-vinyl alcohol copolymer cake lacks hardness, so that it is not pulverized into crumbs, and becomes a slurry. Therefore, washing is not easy, and the ethylene-vinyl alcohol copolymer comes out in the form of fine particles during the washing process, which is not preferable because the loss may increase.

Subsequently, the ethylene-vinyl alcohol copolymer solution is cooled to prepare an ethylene-vinyl alcohol copolymer cake in which the ethylene-vinyl alcohol copolymer is coagulated (step 3), and the ethylene-vinyl alcohol copolymer cake is pulverized to obtain a crumb (step 4).

Since the crumb has a larger surface area than the conventional ethylene-vinyl alcohol copolymer pellets, it is possible to more effectively remove impurities during washing with water, and thus, a high-purity ethylene-vinyl alcohol copolymer can be prepared by a simple washing process.

The cooling process for obtaining the ethylene-vinyl alcohol copolymer cake may be performed at -15 °C to -1 °C, or at -10 °C to -3 °C. For example, the ethylene-vinyl alcohol copolymer solution is put into a cooling solidification mold 3 and left at -15 °C to -1 °C to obtain an ethylene-vinyl alcohol copolymer cake.

The pulverizing machine 4 used for pulverizing the cake is not particularly limited, and for example, a device such as a low speed crusher, an industrial mixer, or an industrial chopper may be used as the pulverizing machine. The average particle diameter (D50) of the crumb is preferably 0.1 mm or more, or 0.5 mm or more, and 2.5 mm or less, or 2 mm or less to prevent loss of the ethylene-vinyl alcohol copolymer while improving washing efficiency. Since the pulverization of the cake is performed in a solution, the particle diameter can be adjusted according to the pulverization conditions as well as the solvent composition and solid content of the solution. An appropriate average particle diameter of the crumb can be achieved by satisfying the weight ratio of C₁₋₄ alcohol to water and the solid content as described above.

The average particle diameter (D50) of the crumb may be measured using a particle size analyzer, for example, a laser diffraction particle size analyzer (e.g., Microtrac S3500). Specifically, the copolymer powder to be measured is dispersed in the dispersion medium and introduced into a laser diffraction particle size analyzer. Then, a particle size distribution is obtained by measuring a difference in diffraction patterns according to particle diameters when the particles pass through the laser beam. In the measuring device, the average particle diameter (D50) can be obtained by calculating a particle diameter at a point of reaching 50% of the cumulative distribution of particle volume according to particle diameters.

Subsequently, the crumb is washed with water to obtain a purified ethylene-vinyl alcohol copolymer (step 5).

Since the pulverization step is performed in a solution, a step of dehydrating the solution containing the crumb may be performed using a centrifugal dehydrator 5, or the like before washing with water. Thereafter, the crumb on which the dehydration is completed is put into a washing tank 6, water is added and stirred, and then dehydration is carried out using a centrifugal dehydrator 7 to perform a washing process with water. The washing process with water may be performed once, or may be repeated two or more times as needed.

The water used for washing with water may be distilled water or deionized water having an electrical conductivity of 10 µS/cm or less, preferably 5 µS/cm or less. As the lower electrical conductivity of the water can be evaluated as the better, the lower limit is not limited. However, it may be, for example, 0.1 µS/cm or more, or 0.3 µS/cm or more.

The amount of water added during washing is preferably 100 parts by weight or more, 200 parts by weight or more, or 300 parts by weight or more, and 1,000 parts by weight or less, 800 parts by weight or less, or 600 parts by weight or less. When the amount of water added is too small, impurities cannot be sufficiently dissolved from the crumb, and when the amount of water added is too large, only the consumption of washing water increases without increment of the washing efficiency, so it is preferable to satisfy the above range.

The temperature of the water during washing with water is preferably 10 °C to 40 °C, or 20 °C to 30 °C, as the water within the above range can effectively remove impurities while preventing damage to the ethylene-vinyl alcohol copolymer.

Since the crumb of the ethylene-vinyl alcohol copolymer has a large surface area and has superior washing efficiency compared to the existing pellet-type copolymer, it is possible to remove about 90% or more, or about 93.5% or more of impurities even with one washing under the above conditions. However, in order to obtain a higher purity ethylene-vinyl alcohol copolymer, washing with water may be repeated twice or more, if necessary.

The number of repetitions of washing with water is not particularly limited. For example, washing with water may be repeated 2 or more, or 3 or more times, and 7 or less, or 5 or less times. The number of repetitions of washing with water can be adjusted according to the amount of crumb to be processed at one time. In general, about 99.5% of impurities are removed after washing with water 3 times, and about 99.9% of impurities are removed after washing with water 5 times under the above conditions. Considering the economic feasibility and efficiency of the process, the number of repetitions of washing with water may be 7 or less, or 5 or less.

Alternatively, the washing with water may be repeated several times until the electrical conductivity of the dehydrated washing solution is 10 µS/cm or less, or 8 µS/cm or less, preferably 7 µS/cm or less. The electrical conductivity of the washing solution is a measure of an amount of the residual alkali catalyst and the impurity content in the crumb. The lower electrical conductivity of the washing solution can be evaluated as the higher purity of the ethylene-vinyl alcohol copolymer.

The washing with water may be performed for 20 minutes or more, or 30 minutes or more, and 2 hours or less, or 1 hour or less in each cycle. As will be confirmed in Examples to be described later, the washing efficiency is remarkably improved in the present disclosure, so that it is possible to secure an excellent washing effect even after washing within 2 hours.

The ethylene-vinyl alcohol copolymer obtained after completing the washing with water has a residual sodium content of 30 ppm or less, 20 ppm or less, or 10 ppm or less, indicating very little impurity content. The lower residual sodium content can be evaluated as the better, the residual sodium content can theoretically be 0 ppm.

According to the above preparation method, the efficiency of the washing process is significantly improved compared to the existing preparation method of an ethylene-vinyl alcohol copolymer, thereby preparing a high purity ethylene-vinyl alcohol copolymer by a relatively simple washing process. Therefore, according to the present disclosure, the production efficiency of the ethylene-vinyl alcohol copolymer can be improved, and the amount of wastewater generated in the washing process can be minimized, thereby reducing environmental pollution.

Hereinafter, the present invention will be described in more detail with reference to examples. However, these examples are for illustrative purposes only, and the invention is not intended to be limited by these examples.

### <Examples>

### Example 1

An ethylene-vinyl alcohol copolymer was prepared by the following method using the apparatus of FIG. 1.

100 parts by weight of an ethylene-vinyl acetate copolymer (EVAc, Mw 230,000 g/mol) having an ethylene content of 32 mol% and 400 parts by weight of methanol were placed in a saponification reactor, and 60 parts by weight of a methanol solution of sodium hydroxide (16 g/L) was added. Then, nitrogen gas was blown into the reactor, and a saponification reaction was performed at 60 °C for 6 hours while removing by-products, methyl acetate, together with methanol to the outside, thereby obtaining a reaction mixture containing an ethylene-vinyl alcohol (EVOH) copolymer.

42 g of acetic acid (AcOH, acetic acid/saponification catalyst = 1/1 mol ratio) and 0.24 kg of water were added to 15 kg of the reaction mixture for neutralization. Argon gas was blown into a neutralization tank 1, and the reaction mixture was concentrated while removing 10.8 kg of methanol to the outside of the neutralization tank 1 at an internal temperature of 64 °C.

Then, 2.05 kg of water (distilled water, electrical conductivity 4 µS/cm) was introduced into the neutralization tank 1 to prepare an ethylene-vinyl alcohol (EVOH) solution having a weight ratio of methanol to water of 6:4, and the total solid content (TSC) of 15%.

The EVOH solution was placed in a cooling solidification mold 3 and solidified at -8 °C to obtain an EVOH cake.

Then, the EVOH cake was pulverized in the form of crumb having an average particle diameter (D50) of 1 mm to 1.5 mm using a pulverizing machine 4.

The EVOH crumb was put into a centrifugal dehydrator 5, and primary dehydration was performed. The EVOH crumb on which the primary dehydration had been completed was put into a washing tank 6, and 25 °C water (distilled water, electrical conductivity 4 µS/cm) was added in an amount of 500 parts by weight based on 100 parts by weight of the EVOH crumb. Thereafter, it was stirred for 2 hours for washing with water, and then placed in a centrifugal dehydrator 7 to dehydrate the washing solution. The washing with water operation was performed by repeating the washing with water and the dehydration of washing solution 4 more times, and the conductivity of the dehydrated washing solution and the sodium content of the EVOH crumb were measured each time. At this time, the washing solution and the EVOH crumb in the washing tank 6 were aliquoted at 30-minute intervals in the initial 3 times of washing with water, and at 1-hour intervals in the 4th and 5th washing with water, and the electrical conductivity of the washing solution and the sodium content of the EVOH crumb were analyzed.

After completing the washing with water 5 times in total, an EVOH copolymer in the form of crumb having a moisture content of 70 wt% was finally obtained.

### Example 2

An ethylene-vinyl acetate copolymer having an ethylene content of 32 mol% was saponified to obtain a reaction mixture containing an ethylene-vinyl alcohol (EVOH) copolymer in the same manner as in Example 1.

42 g of acetic acid (AcOH, acetic acid/saponification catalyst = 1/1 mol ratio) and 0.4 kg of water were added to 15 kg of the reaction mixture for neutralization. Argon gas was blown into a neutralization tank 1, and the reaction mixture was concentrated while removing 12.6 kg of methanol to the outside of the neutralization tank 1 at an internal temperature of 100 °C.

Then, 2 kg of water (distilled water, electrical conductivity 4 µS/cm) was introduced into the neutralization tank 1 to prepare an ethylene-vinyl alcohol (EVOH) solution having a weight ratio of methanol to water of 4:6, and the total solid content (TSC) of 20%.

Thereafter, an EVOH cake was prepared and pulverized in the same manner as in Example 1, followed by washing with water 5 times to finally obtain a crumb-type EVOH copolymer having a moisture content of 72 wt%.

### Comparative Example 1

An ethylene-vinyl acetate copolymer having an ethylene content of 32 mol% was saponified to obtain a reaction mixture containing an ethylene-vinyl alcohol (EVOH) copolymer in the same manner as in Example 1.

42 g of acetic acid (AcOH, acetic acid/saponification catalyst = 1/1 mol ratio) and 0.1 kg of water were added to 15 kg of the reaction mixture for neutralization. Argon gas was blown into a neutralization tank, and the reaction mixture was concentrated while removing 13.2 kg of methanol to the outside of the neutralization tank at an internal temperature of 64 °C.

Then, 0.57 kg of water (distilled water, electrical conductivity 4 µS/cm) was introduced into the neutralization tank to prepare an EVOH solution having a weight ratio of methanol to water of 6:4, and the total solid content (TSC) of 35%.

The EVOH solution was discharged into a cooling tank filled with water at 2 °C using an extruder having a 1.8 mm diameter hole, and solidified in the form of strand. The solid strand was cut with a pelletizer to obtain EVOH pellets with a length of 1.5 to 2.5 mm.

The EVOH pellets obtained above were put into a washing tank, and 25 °C water (distilled water, electrical conductivity 4 µS/cm) was added. Thereafter, it was stirred for 2 hours for washing with water, and then placed in a centrifugal dehydrator to dehydrate the washing solution. The washing with water operation was performed by repeating the washing with water and the dehydration of washing solution 4 more times, and the conductivity of the dehydrated washing solution and the sodium content of the EVOH crumb were measured each time. At this time, the washing solution and the EVOH pulverized product in the washing tank 6 were aliquoted at 30-minute intervals in the initial 3 times of washing with water, and at 1-hour intervals in the 4th and 5th washing with water, and the electrical conductivity of the washing solution and the sodium content of the EVOH pulverized product were analyzed.

After completing the washing with water 5 times in total, an EVOH copolymer in the form of pellets having a moisture content of 50 wt% was finally obtained.

### Comparative Example 2

An ethylene-vinyl acetate copolymer having an ethylene content of 32 mol% was saponified to obtain a reaction mixture containing an ethylene-vinyl alcohol (EVOH) copolymer in the same manner as in Example 1.

42 g of acetic acid (AcOH, acetic acid/saponification catalyst = 1/1 mol ratio) and 0.1 kg of water were added to 15 kg of the reaction mixture for neutralization. Argon gas was blown into a neutralization tank 1, and the reaction mixture was concentrated while removing 12.9 kg of methanol to the outside of the neutralization tank 1 at an internal temperature of 100 °C.

Then, 0.76 kg of water (distilled water, electrical conductivity 4 µS/cm) was introduced into the neutralization tank 1 to prepare an ethylene-vinyl alcohol (EVOH) solution having a weight ratio of methanol to water of 6:4, and the total solid content (TSC) of 30%.

Thereafter, an EVOH cake was prepared and pulverized in the same manner as in Example 1, followed by washing with water 5 times to finally obtain a crumb-type EVOH copolymer having a moisture content of 68 wt%.

### Comparative Example 3

An ethylene-vinyl acetate copolymer having an ethylene content of 32 mol% was saponified to obtain a reaction mixture containing an ethylene-vinyl alcohol (EVOH) copolymer in the same manner as in Example 1.

42 g of acetic acid (AcOH, acetic acid/saponification catalyst = 1/1 mol ratio) and 0.4 kg of water were added to 15 kg of the reaction mixture for neutralization. Argon gas was blown into a neutralization tank 1, and the reaction mixture was concentrated while removing 2.5 kg of methanol to the outside of the neutralization tank 1 at an internal temperature of 100 °C.

Then, 7.4 kg of water (distilled water, electrical conductivity 4 µS/cm) was introduced into the neutralization tank 1 to prepare an ethylene-vinyl alcohol (EVOH) solution having a weight ratio of methanol to water of 6:4, and the total solid content (TSC) of 5%.

The EVOH solution was placed in a cooling solidification mold 3 and solidified at -8 °C to obtain an EVOH cake.

Then, an attempt was made to pulverize the EVOH cake in a pulverizing machine 4, but the cake was not pulverized in the form of crumb due to insufficient hardness, and the pulverized product was in the form of a slurry.

The slurry was put into a washing tank 6, and 25 °C water (distilled water, electrical conductivity 4 µS/cm) was added in an amount of 500 parts by weight based on 100 parts by weight of the EVOH pulverized product. Thereafter, it was stirred for 2 hours for washing with water, and then placed in a centrifugal dehydrator 7 for dehydration. However, the pulverized product (slurry) was dissolved in the washing water and came out. Further, EVOH in the form of fine particles passed through a filter and a significant amount of the obtained product was lost.

Accordingly, it was confirmed that the desired effect of the present invention could not be obtained under the above conditions.

### <Experimental Examples>

### (1) Total solid content (TSC) of EVOH solution

The total solid content of the EVOH solution prepared in one of Examples and Comparative Examples was measured by the following method.

Some (W1) of the EVOH solution was placed in an aluminum dish, dried in a vacuum oven at 75 °C for 24 hours, and then the weight (W2) of the dried product was measured, followed by calculating the TSC with the following equation. TSC (wt%) = Weight of sample after drying (W2)/Weight of sample before drying (W1) * 100

### (2) Analysis of residual sodium content of EVOH copolymer

The EVOH copolymer was dried in a vacuum oven at 75 °C for 24 hours. After aliquoting 0.2 g of the dried sample into a vessel for microwave digestion (MDS), 3 mL of nitric acid and 0.5 mL of hydrogen peroxide were added to operate MDS (90 bar, heated to 250 °C for 30 minutes and maintained for 15 minutes). After the reaction was completed, 0.1 mL of an internal standard solution (Sc 1,000 ppm aqueous solution) was added, and ultrapure water was added so that the total volume of the sample was 10 mL, thereby preparing a sample for inductively coupled plasma optical emission spectroscopy (ICP-OES).

After stabilizing the ICP-OES instrument (Optima 8300DV), the sample was injected and analyzed under the following conditions.

### <ICP-OES analysis conditions>

RF power: 1300 W
Plasma Gas Flow: 15 L/min
Auxiliary Gas Flow: 0.80 L/min
Internal Standard: Sc
Plasma Gas, Auxiliary Gas: Ar

### (3) Measurement of electrical conductivity of washing solution

An electrical conductivity meter (Thermo Scientific, EUTECH COND 6+) was calibrated with an 84 µS/cm standard solution, and then the electrical conductivity of the washing solution at room temperature (25 °C) was measured. The washing solution to be measured was aliquoted 3 times, and the electrical conductivity was measured, respectively. Then, an average value derived therefrom was shown in Tables 1 and 2 below.

**[Table 1]**

| Example 1 | | | | Example 2 | | | |
|---|---|---|---|---|---|---|---|
| Number of washings | Washing times | Electrical conductivity (µS/cm) | Na content (ppm) | Number of washings | Washing times | Electrical conductivity (µS/cm) | Na content (ppm) |
| Before washing | - | - | 6750 | After washing | - | - | 6750 |
| First | 0.5h | 379.9 | 375 | First | 0.5h | 467.6 | 438 |
| | 1.0h | 383.6 | 370 | | 1.0h | 459.2 | 432 |
| | 1.5h | 383.4 | 372 | | 1.5h | 461.8 | 435 |
| | 2.0h (after dehydration) | 382.7 | 371 | | 2.0h (after dehydration) | 463.7 | 433 |
| Second | 0.5h | 359.5 | 30 | Second | 0.5h | 354.8 | 83 |
| | 1.0h | 360.8 | 32 | | 1.0h | 359.2 | 81 |
| | 1.5h | 361.3 | 31 | | 1.5h | 362.9 | 85 |
| | 2.0h (after dehydration) | 355.6 | 30 | | 2.0h (after dehydration) | 358.8 | 83 |
| Third | 0.5h | 26.46 | 10 | Third | 0.5h | 26.08 | 20 |
| | 1.0h | 25.44 | 11 | | 1.0h | 24.18 | 19 |
| | 1.5h | 23.93 | 9 | | 1.5h | 26.77 | 19 |
| | 2.0h (after dehydration) | 26.66 | 10 | | 2.0h (after dehydration) | 26.32 | 18 |
| Fourth | 1.0h | 5.27 | 9 | Fourth | 1.0h | 12.02 | 10 |
| | 2.0h (after dehydration) | 6.04 | 10 | | 2.0h (after dehydration) | 11.94 | 10 |
| Fifth | 1.0h | 5.06 | 8 | Fifth | 1.0h | 6.63 | 8 |
| | 2.0h (after dehydration) | 4.51 | 9 | | 2.0h (after dehydration) | 6.73 | 9 |

**[Table 2]**

| Comparative Example 1 | | | | Comparative Example 2 | | | |
|---|---|---|---|---|---|---|---|
| Number of washings | Washing times | Electrical conductivity (µS/cm) | Na content (ppm) | Number of washings | Washing times | Electrical conductivity (µS/cm) | Na content (ppm) |
| Before washing | - | - | 6750 | Before washing | - | - | 6750 |
| First | 0.5h | 218.3 | 1020 | First | 0.5h | 313.2 | 677 |
| | 1.0h | 239.9 | 975 | | 1.0h | 307.5 | 643 |
| | 1.5h | 267.2 | 955 | | 1.5h | 345.6 | 623 |
| | 2.0h (after dehydration) | 292.4 | 950 | | 2.0h (after dehydration) | 323.3 | 622 |
| Second | 0.5h | 365.7 | 390 | Second | 0.5h | 413.2 | 199 |
| | 1.0h | 369.3 | 375 | | 1.0h | 417.6 | 188 |
| | 1.5h | 373.8 | 360 | | 1.5h | 428.1 | 174 |
| | 2.0h (after dehydration) | 388.1 | 357 | | 2.0h (after dehydration) | 420.8 | 172 |
| Third | 0.5h | 82.35 | 150 | Third | 0.5h | 77.39 | 94 |
| | 1.0h | 85.62 | 145 | | 1.0h | 79.52 | 93 |
| | 1.5h | 92.43 | 135 | | 1.5h | 89.59 | 89 |
| | 2.0h (after dehydration) | 93.36 | 135 | | 2.0h (after dehydration) | 85.48 | 89 |
| Fourth | 1.0h | 14.92 | 40 | Fourth | 1.0h | 11.95 | 35 |
| | 2.0h (after dehydration) | 14.87 | 42 | | 2.0h (after dehydration) | 11.93 | 35 |
| Fifth | 1.0h | 13.42 | 30 | Fifth | 1.0h | 9.61 | 35 |
| | 2.0h (after dehydration) | 13.56 | 30 | | 2.0h (after dehydration) | 9.45 | 36 |

Referring to Table 1, it was confirmed in Examples 1 and 2 that the sodium content in the ethylene-vinyl alcohol copolymer was reduced by 93.5% or more with only one washing, and the electrical conductivity of the washing solution was sharply lowered and only a very small amount of sodium remained after washing 3 times.

However, it was confirmed in Comparative Example 1 according to the existing preparation method that the residual sodium content exceeded 100 ppm even after washing 3 times, and the electrical conductivity of the washing solution exceeded 10 µS/cm even after washing 5 times, indicating that the washing efficiency was significantly lowered compared to Examples 1 and 2.

In addition, Comparative Example 2 in which the EVOH solution had a solid content of more than 25 wt% was superior to Comparative Example 1, but had the residual sodium insufficiently removed compared to Examples 1 and 2. Further, it was confirmed from the electrical conductivity results that Comparative Example 2 had lower washing efficiency than Examples 1 and 2.

In addition, comparing the electrical conductivity and the residual sodium content for each washing time in each washing cycle in Examples 1 and 2, the electrical conductivity of the washing solution and the sodium content of the copolymer were similar within the error range after washing for 0.5 hours and after washing for 2 hours. Therefore, according to the present disclosure, it can be expected to obtain a washing efficiency similar to the above even if the washing time is reduced to 0.5 hours. On the other hand, since the sodium content of the copolymer gradually decreased as the washing time increased in Comparative Example 1, it is determined that a washing time of 2 hours or more in each cycle is required for sufficient washing.

Therefore, according to the preparation method of the present disclosure, it is possible to remove most of the impurities even with one washing, and a high-purity ethylene-vinyl alcohol copolymer can be obtained with three or more times of washing, while greatly reducing the washing time. Thus, it can be confirmed from the experimental results that the efficiency of the washing process is significantly improved compared to the conventional preparation method.

### [DESCRIPTION OF SYMBOLS]

1: Batch-type neutralization tank
2: condenser
3: Cooling bath of ethylene-vinyl alcohol copolymer solution
4: Pulverizing machine
5, 7: Centrifugal dehydrator
6: Washing tank
8: Distillate tank
9, 10: Washing solution tank

## Claims

1. A preparation method for an ethylene-vinyl alcohol copolymer, comprising the steps of:
performing saponification on an ethylene-vinyl acetate copolymer in the presence of an alkali catalyst and a C₁₋₄ alcohol solvent to obtain a reaction mixture containing an ethylene-vinyl alcohol copolymer;
concentrating the reaction mixture and then adding water to prepare an ethylene-vinyl alcohol copolymer solution having a weight ratio of the C₁₋₄ alcohol to water in the solvent of 1:9 to 9:1 and a solid content of 10 wt% to 25 wt%, measured as indicated in the description;
cooling the ethylene-vinyl alcohol copolymer solution to prepare an ethylene-vinyl alcohol copolymer cake in which the ethylene-vinyl alcohol copolymer is coagulated;
pulverizing the ethylene-vinyl alcohol copolymer cake to obtain an ethylene-vinyl alcohol copolymer crumb; and
washing the crumb with water.

2. The preparation method for an ethylene-vinyl alcohol copolymer of Claim 1,
wherein the ethylene-vinyl alcohol copolymer solution has the weight ratio of the C₁₋₄ alcohol to the water in the solvent of 3:7 to 7:3.

3. The preparation method for an ethylene-vinyl alcohol copolymer of Claim 1,
wherein the ethylene-vinyl alcohol copolymer solution has the solid content of 15 wt% to 20 wt%.

4. The preparation method for an ethylene-vinyl alcohol copolymer of Claim 1,
wherein the C₁₋₄ alcohol is at least one selected from the group consisting of methanol, ethanol, n-propanol, isopropanol, n-butanol, and t-butanol.

5. The preparation method for an ethylene-vinyl alcohol copolymer of Claim 1,
wherein the cooling of the ethylene-vinyl alcohol copolymer solution is performed at -15 °C to -1 °C.

6. The preparation method for an ethylene-vinyl alcohol copolymer of Claim 1,
wherein an average particle diameter (D50) of the ethylene-vinyl alcohol copolymer crumb is 0.1 mm to 2.5 mm, measured as indicated in the description.

7. The preparation method for an ethylene-vinyl alcohol copolymer of Claim 1,
wherein the washing with water is repeated 2 to 5 times.

8. The preparation method for an ethylene-vinyl alcohol copolymer of Claim 1 or Claim 7,
wherein an electrical conductivity of the washing solution dehydrated after the wahing with water is 10 µS/cm or less, measured as indicated in the description.

9. The preparation method for an ethylene-vinyl alcohol copolymer of Claim 1 or Claim 7,
wherein a residual sodium content of the ethylene-vinyl alcohol copolymer obtained after the washing with water is 30 ppm or less, measured as indicated in the description.

## Patentansprüche

1. Verfahren zur Herstellung eines Ethylen-Vinylalkohol-Copolymers, umfassend die folgenden Schritte:
Durchführen einer Verseifung eines Ethylen-Vinylacetat-Copolymers in Gegenwart eines alkalischen Katalysators und eines C₁₋₄-Alkohol-Lösungsmittels, um ein Reaktionsmischung zu erhalten, die ein Ethylen-Vinylalkohol-Copolymer enthält;
Konzentrieren der Reaktionsmischung und anschließende Zugabe von Wasser, um eine Ethylen-Vinylalkohol-Copolymer-Lösung herzustellen mit einem Gewichtsverhältnis von C₁₋₄-Alkohol zu Wasser in dem Lösungsmittel von 1:9 bis 9:1 und einem Feststoffgehalt von 10 Gew.-% bis 25 Gew.-%, gemessen wie in der Beschreibung angegeben;
Abkühlen der Ethylen-Vinylalkohol-Copolymer-Lösung, um ein Ethylen-Vinylalkohol-Copolymer-Kuchen herzustellen, in dem das Ethylen-Vinylalkohol-Copolymer koaguliert ist;
Pulverisieren des Ethylen-Vinylalkohol-Copolymer-Kuchens, um eine Ethylen-Vinylalkohol-Copolymer-Krume zu erhalten; und
Waschen der Krume mit Wasser.

2. Verfahren zur Herstellung eines Ethylen-Vinylalkohol-Copolymers gemäß Anspruch 1,
wobei die Ethylen-Vinylalkohol-Copolymer-Lösung ein Gewichtsverhältnis von C₁₋₄-Alkohol zu Wasser in dem Lösungsmittel von 3:7 bis 7:3 aufweist.

3. Verfahren zur Herstellung eines Ethylen-Vinylalkohol-Copolymers gemäß Anspruch 1,
wobei die Ethylen-Vinylalkohol-Copolymer-Lösung einen Feststoffgehalt von 15 Gew.-% bis 20 Gew.-% aufweist.

4. Verfahren zur Herstellung eines Ethylen-Vinylalkohol-Copolymers gemäß Anspruch 1,
wobei der C₁₋₄-Alkohol mindestens einer ist, der ausgewählt ist aus einer Gruppe bestehend aus Methanol, Ethanol, n-Propanol, Isopropanol, n-Butanol und t-Butanol.

5. Verfahren zur Herstellung eines Ethylen-Vinylalkohol-Copolymers gemäß Anspruch 1,
wobei das Abkühlen der Ethylen-Vinylalkohol-Copolymer-Lösung bei -15°C bis -1°C durchgeführt wird.

6. Verfahren zur Herstellung eines Ethylen-Vinylalkohol-Copolymers gemäß Anspruch 1,
wobei der mittlere Teilchendurchmesser (D50) der Ethylen-Vinylalkohol-Copolymer-Krume 0,1 mm bis 2,5 mm beträgt, gemessen wie in der Beschreibung angegebenen.

7. Verfahren zur Herstellung eines Ethylen-Vinylalkohol-Copolymers gemäß Anspruch 1,
wobei das Waschen mit Wasser 2- bis 5-Mal wiederholt wird.

8. Verfahren zur Herstellung eines Ethylen-Vinylalkohol-Copolymers gemäß Anspruch 1 oder Anspruch 7,
wobei die elektrische Leitfähigkeit der Waschlösung, die nach dem Waschen mit Wasser entwässert wurde, 10µS/cm oder weniger beträgt, gemessen wie in der Beschreibung angegeben.

9. Verfahren zur Herstellung eines Ethylen-Vinylalkohol-Copolymers gemäß Anspruch 1 oder Anspruch 7,
wobei der Restnatriumgehalt des nach dem Waschen mit Wasser erhaltenen Ethylen-Vinylalkohol-Copolymers 30 ppm oder weniger beträgt, gemessen wie in der Beschreibung angegeben.

## Revendications

1. Procédé de préparation pour un copolymère d'éthylène et d'alcool vinylique, comprenant les étapes consistant à :
réaliser la saponification sur un copolymère d'éthylène et d'acétate de vinyle en présence d'un catalyseur alcalin et d'un solvant d'alcool C₁₋₄ pour obtenir un mélange de réaction contenant un copolymère d'éthylène et d'alcool vinylique ;
concentrer le mélange de réaction, puis ajouter de l'eau pour préparer une solution de copolymère d'éthylène et d'alcool vinylique ayant un rapport en poids de l'alcool C₁₋₄ à l'eau dans le solvant de 1:9 à 9:1 et une teneur en solides de 10 % en poids à 25 % en poids, mesurée comme indiqué dans la description ;
refroidir la solution de copolymère d'éthylène et d'alcool vinylique pour préparer un gâteau de copolymère d'éthylène-alcool vinylique dans lequel le copolymère d'éthylène-alcool vinylique est coagulé ;
pulvériser le gâteau de copolymère d'éthylène et d'alcool vinylique pour obtenir une poudre de copolymère d'éthylène-alcool vinylique ; et
laver la poudre à l'eau.

2. Procédé de préparation d'un copolymère d'éthylène et d'alcool vinylique selon la revendication 1,
dans lequel la solution de copolymère d'éthylène et d'alcool vinylique a un ratio en poids d'alcool C₁₋₄ à l'eau dans le solvant de 3:7 à 7:3.

3. Procédé de préparation d'un copolymère d'éthylène et d'alcool vinylique selon la revendication 1,
dans lequel la solution de copolymère d'éthylène et d'alcool vinylique a une teneur en solides de 15% en poids à 20% en poids.

4. Procédé de préparation d'un copolymère d'éthylène et d'alcool vinylique selon la revendication 1,
dans lequel l'alcool C₁₋₄ est au moins un sélectionné dans le groupe composé du méthanol, de l'éthanol, du n-propanol, de l'isopropanol, du n-butanol, et du t-butanol.

5. Procédé de préparation d'un copolymère d'éthylène et d'alcool vinylique selon la revendication 1,
dans lequel le refroidissement de la solution de copolymère d'éthylène et d'alcool vinylique est effectuée à une température de -15 °C à -1 °C.

6. Procédé de préparation d'un copolymère d'éthylène et d'alcool vinylique selon la revendication 1,
dans lequel un diamètre moyen de particule (D50) de la poudre de copolymère d'éthylène et d'alcool vinylique est de 0,1 à 2,5 mm, mesuré comme indiqué dans la description.

7. Procédé de préparation d'un copolymère d'éthylène et d'alcool vinylique selon
la revendication 1, dans lequel le lavage à l'eau est répété 2 à 5 fois.

8. Procédé de préparation d'un copolymère d'éthylène et d'alcool vinylique selon la revendication 1 ou la revendication 7,
dans lequel une conductivité électrique de la solution de lavage déshydratée après lavage à l'eau est de 10 µS/cm ou moins, mesurée comme indiqué dans la description.

9. Procédé de préparation d'un copolymère d'éthylène et d'alcool vinylique selon la revendication 1 ou la revendication 7,
dans lequel une teneur en sodium résiduel du copolymère d'éthylène et d'alcool vinylique obtenu après lavage à l'eau est de 30 ppm ou moins, mesuré comme indiqué dans la description.
